# EUROPEAN PATENT APPLICATION

(11) **EP 4 786 613 A1**
(43) Date of publication of application: **05.08.2026**
(21) Application number: 24872579.8
(22) Date of filing: 27.09.2024
(51) Int. Cl.: C22B 26/12, C01F 11/18, C01F 11/22, C22B 3/02, C22B 3/04, C22B 3/06, C22B 3/20, C22B 3/22, C22B 3/44, C22B 7/00, H01M 10/54

(54) **METHOD FOR TREATING LITHIUM-CONTAINING SUBSTANCE AND DEVICE FOR TREATING LITHIUM-CONTAINING SUBSTANCE**

(30) Priority: 27.09.2023 JP 2023166485; 26.09.2024 JP 2024167391
(71) Applicant: Mitsubishi Materials Corporation, Tokyo 100-8117 (JP)
(72) Inventor: HAYASHI Hiroshi, Tokyo 100-8117 (JP); IMASAKI Nanako, Iwaki-shi, Fukushima 971-8101 (JP); SATO Ryosuke, Iwaki-shi, Fukushima 971-8101 (JP); MURAOKA Hiroki, Iwaki-shi, Fukushima 971-8101 (JP)
(74) Representative: Gille Hrabal Partnerschaftsgesellschaft mbB Patentanwälte
(86) International application number: PCT/JP2024/034825
(87) International publication number: WO 2025/070799

(57) **Abstract**

The present invention includes a leaching step S01 of leaching lithium into an acidic solution by immersing a lithium-containing substance in the acidic solution to obtain a lithium leachate, a heavy metal and first fluorine precipitation step S02 of adding a first calcium compound to the lithium leachate to generate a precipitate of a metal hydroxide and a precipitate of fluorine, a first solid-liquid separation step S03 of removing the precipitated metal hydroxide precipitate and precipitate of fluorine from the lithium leachate, a second fluorine precipitation step S04 of adding a second calcium compound to the lithium leachate after the removal of the precipitates to cause dissolved fluorine to precipitate, and a second solid-liquid separation step S05 of removing a precipitate of the precipitated dissolved fluorine and an unreacted substance of the second calcium compound from the lithium leachate.

## Description

### TECHNICAL FIELD

The present invention relates to a method for treating a lithium-containing substance and a device for treating a lithium-containing substance.

Priority is claimed on Japanese Patent Application No. 2023-166485 filed on September 27, 2023, and Japanese Patent Application No. 2024-167391 filed on September 26, 2024, the contents of which are incorporated herein by reference.

### BACKGROUND ART

In recent years, lithium has been recovered and reused from lithium-containing substances such as a pulverized substance of a lithium ion battery.

As a method of recovering lithium from a lithium-containing substance, a method of leaching lithium into an acidic solution by immersing battery scraps obtained by roasting a lithium ion battery waste in an acidic solution and recovering lithium from an obtained lithium leachate is known.

A liquid into which lithium has been leached also contains metals other than lithium, such as cobalt and aluminum, but by adding an alkali such as sodium hydroxide or calcium hydroxide to the liquid and neutralizing the liquid, metals other than lithium mainly precipitate, and solid-liquid separation is performed to separate and obtain a lithium solution and other substances (Patent Document 1).

In addition, as a lithium separation method of separating lithium from an aqueous lithium solution containing 200 mg/L or more of lithium and 20 mg/L or more of fluorine, and having a pH of 10.5 or more, a method of adding calcium hydroxide to the aqueous lithium solution, solidifying the fluorine contained in the aqueous lithium solution, and removing the solidified fluorine to obtain an aqueous lithium solution from which the fluorine is removed is known. In this method, carbon dioxide is further added to the aqueous lithium solution, residual calcium is solidified, and the solidified calcium is removed to obtain an aqueous lithium solution from which fluorine and calcium are removed (Patent Document 2).

### Citation List

### Patent Documents

Patent Document 1: Japanese Patent No. 6998241
Patent Document 2: Japanese Patent No. 6869444

### SUMMARY OF INVENTION

### Technical Problem

However, as described in Patent Document 1, in a case where an alkali agent such as sodium hydroxide is added to the aqueous lithium solution for a neutralization treatment of the lithium leachate, it is difficult to separate sodium ions and lithium ions, and a lithium compound with high purity cannot be recovered.

In addition, as shown in Patent Document 2, removal of fluorine is insufficient in only one stage of a fluorine removal treatment, and a lithium compound having a desired purity for reuse cannot be obtained.

The present invention has been made in consideration of the above-described circumstances, and an objective of the present invention is to provide a method and a device for treating a lithium-containing substance which are capable of recovering lithium from a lithium-containing substance with high purity.

### Solution to Problem

In order to solve the above-described problem, according to Aspect 1 of the present invention, there is provided a method for treating a lithium-containing substance, including: a leaching step of adding an acidic solution containing an inorganic acid to the lithium-containing substance to leach lithium into the acidic solution; a heavy metal and first fluorine precipitation step of adding a first calcium compound to a lithium leachate obtained in the leaching step to cause a heavy metal ion to precipitate as a hydroxide and cause fluorine to precipitate; a first solid-liquid separation step of separating the hydroxide of the heavy metal ion and a precipitate of the fluorine from the lithium leachate after the heavy metal and first fluorine precipitation step; a second fluorine precipitation step of adding a second calcium compound to the lithium leachate after the first solid-liquid separation step to cause dissolved fluorine to precipitate; and a second solid-liquid separation step of separating a precipitate of the dissolved fluorine and an unreacted second calcium compound from the lithium leachate after the second fluorine precipitation step to obtain a lithium-containing solution.

According to the method for treating a lithium-containing substance according to Aspect 1 of the present invention, in the heavy metal and first fluorine precipitation step, the first calcium compound is added to cause heavy metals such as cobalt, nickel, and manganese, and fluorine dissolved in the lithium leachate to precipitate, and in the first solid-liquid separation step, the precipitates and the lithium leachate are separated. Therefore, a lithium leachate with high lithium purity from which heavy metals and fluorine have been removed can be obtained.

Further, by adding the second calcium compound to the lithium leachate in the second fluorine precipitation step, the dissolved fluorine that is not completely removed in the heavy metal and first fluorine precipitation step and the first solid-liquid separation step is caused to precipitate, and in the second solid-liquid separation step, a precipitate of the precipitated dissolved fluorine and an unreacted substance of the second calcium compound added in the second fluorine precipitation step are removed. According to this, it is possible to remove fluorine in an amount that cannot be completely removed in a treatment of removing fluorine in one stage, and it is possible to obtain a lithium-containing solution with higher lithium purity as compared with the related art.

In both the precipitation steps, since a calcium compound is used for adjusting a pH of the lithium leachate, the amount of sodium mixed into the lithium leachate can be reduced as compared with a case where sodium hydroxide (sodium compound) is used for neutralization described in Patent Document 1.

According to Aspect 2 of the present invention, the method for treating a lithium-containing substance according to Aspect 1 may further include: a calcium precipitation step of adding a soluble carbonate compound to the lithium-containing solution after the second solid-liquid separation step to cause calcium to precipitate as calcium carbonate; and a third solid-liquid separation step of separating the calcium carbonate from the lithium-containing solution after the calcium precipitation step.

According to the method for treating a lithium-containing substance according to Aspect 2 of the present invention, since calcium ions, which are a part of the calcium compound added in the first and second fluorine precipitation steps and remain in the lithium leachate as dissolved calcium ions, can be separated from the lithium-containing solution as calcium carbonate, a lithium-containing solution with higher lithium purity can be obtained.

According to Aspect 3 of the present invention, in the method for treating a lithium-containing substance according to Aspect 1 or Aspect 2, the precipitate of the fluorine and the unreacted second calcium compound, which are separated in the second solid-liquid separation step, may be used as the first calcium compound in the heavy metal and first fluorine precipitation step.

According to the method for treating a lithium-containing substance according to Aspect 3 of the present invention, since the unreacted second calcium compound recovered in the second solid-liquid separation step is used in the heavy metal and first fluorine precipitation step, the chemical cost can be reduced. In addition, since the precipitates generated in the first fluorine precipitation step and the second fluorine precipitation step can be collected, the sludge treatment cost can be reduced.

According to Aspect 4 of the present invention, in the method for treating a lithium-containing substance according to Aspect 2 or Aspect 3, the calcium carbonate separated in the third solid-liquid separation step may be used as the second calcium compound in the second fluorine precipitation step.

According to the method for treating a lithium-containing substance according to Aspect 4 of the present invention, since the calcium carbonate recovered in the third solid-liquid separation step is used in the second fluorine precipitation step, it is possible to reduce the chemical cost and the amount of sludge.

According to Aspect 5 of the present invention, in the method for treating a lithium-containing substance according to any one of Aspect 1 to Aspect 4, a solid content of a calcium fluoride separated in the second solid-liquid separation step may be used as a seed crystal in the second fluorine precipitation step.

According to the method for treating a lithium-containing substance according to Aspect 5 of the present invention, since a solid content recovered in the second solid-liquid separation step is used as a seed crystal in the second fluorine precipitation step, the solid concentration in the second fluorine precipitation step is increased, and thus fluorine removal efficiency can be improved, and the amount of sludge can also be reduced.

According to Aspect 6 of the present invention, in the method for treating a lithium-containing substance according to any one of Aspect 2 to Aspect 5, the calcium carbonate separated in the third solid-liquid separation step is used as a seed crystal in the calcium precipitation step.

According to the method for treating a lithium-containing substance according to Aspect 6 of the present invention, since the calcium carbonate removed in the third solid-liquid separation step is used as a seed crystal in the calcium precipitation step, the solid concentration in the calcium precipitation step is increased, and thus calcium removal efficiency can be increased, and the amount of sludge can also be reduced.

According to Aspect 7 of the present invention, in the method for treating a lithium-containing substance according to any one of Aspect 2 to Aspect 6, in the second fluorine precipitation step, a sodium compound may be added after the second calcium compound is added.

According to the method for treating a lithium-containing substance according to Aspect 7 of the present invention, the sodium compound is used in an auxiliary manner, and as a result, the amount of sodium mixed into the lithium leachate can be further reduced as compared with a case where sodium hydroxide (sodium compound) described in Patent Document 1 is mainly used.

According to Aspect 8 of the present invention, in the method for treating a lithium-containing substance according to any one of Aspect 1 to Aspect 6, in the second fluorine precipitation step, a soluble aluminum compound may be added.

According to the method for treating a lithium-containing substance according to Aspect 8 of the present invention, sedimentation separability is improved by the operation of the soluble aluminum compound as an inorganic flocculant, and the precipitate of the fluorine generated in the second fluorine precipitation step is more likely to be removed. In addition, since aluminum hydroxide generated by hydrolysis of the soluble aluminum has an effect of adsorbing fluorine, it is possible to obtain a lithium-containing solution with higher lithium purity.

According to Aspect 9 of the present invention, in the method for treating a lithium-containing substance according to any one of Aspect 2 to Aspect 7, in the calcium precipitation step, a soluble aluminum compound may be added.

According to the method for treating a lithium-containing substance according to Aspect 9 of the present invention, since the sedimentation separability is improved by the operation of the soluble aluminum compound as an inorganic flocculant, and the calcium carbonate generated in the calcium precipitation step is more likely to be removed, a lithium-containing solution with higher lithium purity can be obtained.

According to Aspect 10 of the present invention, in the method for treating a lithium-containing substance according to any one of Aspect 1 to Aspect 8, in the second solid-liquid separation step, an anionic polymer flocculant may be added.

According to the method for treating a lithium-containing substance according to Aspect 10 of the present invention, since the sedimentation separability is dramatically improved by the polymer flocculant, and the precipitate of the fluorine and the calcium carbonate are more likely to be removed in the second solid-liquid separation step, it is possible to obtain a lithium-containing solution with higher lithium purity.

According to Aspect 11 of the present invention, in the method for treating a lithium-containing substance according to any one of Aspect 2 to Aspect 9, in the third solid-liquid separation step, an anionic polymer flocculant may be added.

According to the method for treating a lithium-containing substance according to Aspect **11** of the present invention, since in the third solid-liquid separation step, the sedimentation separability is dramatically improved by the polymer flocculant, and the calcium carbonate is more likely to be removed, it is possible to obtain a lithium-containing solution with higher lithium purity.

According to Aspect 12 of the present invention, in the method for treating a lithium-containing substance according to any one of Aspect 1 to Aspect 10, in the heavy metal and first fluoride precipitation step, a pH may be adjusted to be in a range of 9 or more and 11 or less by adding the first calcium compound.

According to the method for treating a lithium-containing substance according to Aspect 12 of the present invention, in the heavy metal and first fluorine precipitation step, a large amount of heavy metal ions are likely to be separated as a hydroxide precipitate, and a lithium-containing solution with high lithium purity can be obtained.

In addition, according to Aspect 13 of the present invention, in the method for treating a lithium-containing substance according to any one of Aspect 1 to Aspect 11, in the second fluorine precipitation step, a pH may be adjusted to be in a range of 6.5 or more and 8 or less by adding the second calcium compound.

According to the method for treating a lithium-containing substance according to Aspect 13 of the present invention, in the second fluorine precipitation step, the fluorine is likely to precipitate. Therefore, it is possible to remove a larger amount of fluorine, and a lithium-containing solution with high lithium purity can be obtained.

In addition, according to Aspect 14 of the present invention, in the method for treating a lithium-containing substance according to any one of Aspect 2 to Aspect 12, in the calcium precipitation step, a pH may be adjusted to be in a range of 9 or more and 11 or less by adding the soluble carbonate compound.

According to the method for treating a lithium-containing substance according to Aspect 14 of the present invention, in the calcium precipitation step, the calcium carbonate is likely to precipitate. Therefore, it is possible to remove a larger amount of calcium, and it is possible to obtain a lithium-containing solution with high lithium purity. In addition, it is possible to prevent lithium from precipitating as a carbonate in the calcium precipitation step and to prevent the lithium concentration of the lithium-containing solution from being decreased.

According to Aspect 15 of the present invention, in the method for treating a lithium-containing substance according to any one of Aspect 1 to Aspect 13, the lithium-containing substance may be a fine powder obtained by pulverizing a lithium ion battery.

According to the method for treating a lithium-containing substance according to Aspect 15 of the present invention, high-purity lithium can be recovered from a waste lithium ion battery.

In addition, according to Aspect 16 of the present invention, there is provided a device for treating a lithium-containing substance, including: a leaching tank configured to add an acidic solution containing an inorganic acid to a lithium-containing substance to leach lithium into the acidic solution to generate a lithium leachate; a heavy metal and first fluorine precipitation tank configured to add a first calcium compound to the lithium leachate to cause a heavy metal ion to precipitate as a hydroxide and cause fluorine to precipitate; a first solid-liquid separator configured to separate the hydroxide of the heavy metal ion and a precipitate of the fluorine from the lithium leachate; a second fluorine precipitation tank configured to add a second calcium compound to the lithium leachate to cause dissolved fluorine to precipitate; and a second solid-liquid separator configured to separate a precipitate of the dissolved fluorine and an unreacted second calcium compound from the lithium leachate to obtain a lithium-containing solution.

According to the device for treating a lithium-containing substance of Aspect 16 of the present invention, in the heavy metal and first fluorine precipitation tank, the first calcium compound is added to cause heavy metals such as cobalt, nickel, and manganese, and fluorine dissolved in the lithium leachate to precipitate, and the precipitates are removed in the first solid-liquid separator. Therefore, a lithium leachate with high lithium purity from which heavy metals and fluorine have been removed can be obtained. Furthermore, in the second fluorine precipitation tank, by adding the second calcium compound to the lithium leachate, dissolved fluorine that has not been completely removed in the heavy metal and first fluorine precipitation tank and the first solid-liquid separator is caused to precipitate, and in the second solid-liquid separator, the precipitate of the precipitated dissolved fluorine and the unreacted substance of the second calcium compound added in the second fluorine precipitation tank are removed. In this manner, it is possible to remove fluorine in an amount that cannot be completely removed in a treatment of removing fluorine in one stage, and it is possible to obtain a lithium-containing solution with higher lithium purity.

According to Aspect 17 of the present invention, the device for treating a lithium-containing substance according to Aspect 15 may further include: a calcium precipitation tank configured to add a soluble carbonate compound to the lithium-containing solution to cause calcium to precipitate as calcium carbonate; and a third solid-liquid separator configured to separate the calcium carbonate from the lithium-containing solution.

According to the device for treating a lithium-containing substance of Aspect 17 of the present invention, since the second calcium compound added in the second fluorine precipitation tank is removed, a lithium-containing solution with higher lithium purity is obtained.

### Advantageous Effects of Invention

According to the present invention, it is possible to provide a method and a device for treating a lithium-containing substance which are capable of recovering lithium from a lithium-containing substance with high purity.

### BRIEF DESCRIPTION OF DRAWINGS

[FIG. 1] A flowchart representing a method for treating a lithium-containing substance according to an embodiment of the present invention.
[FIG. 2] A block diagram representing a device for treating a lithium-containing substance according to an embodiment of the present invention.
[FIG. 3] A diagram representing results of powder X-ray diffraction of a precipitate generated by adding 25% NaOH to a lithium-containing solution and stirring the lithium-containing solution in Example.

### DESCRIPTION OF EMBODIMENTS

Hereinafter, a method and a device for treating a lithium-containing substance according to an embodiment of the present invention will be described with reference to the drawings. Note that each of the embodiments shown below is specifically described for better understanding of the gist of the invention, and does not limit the present invention unless otherwise specified.

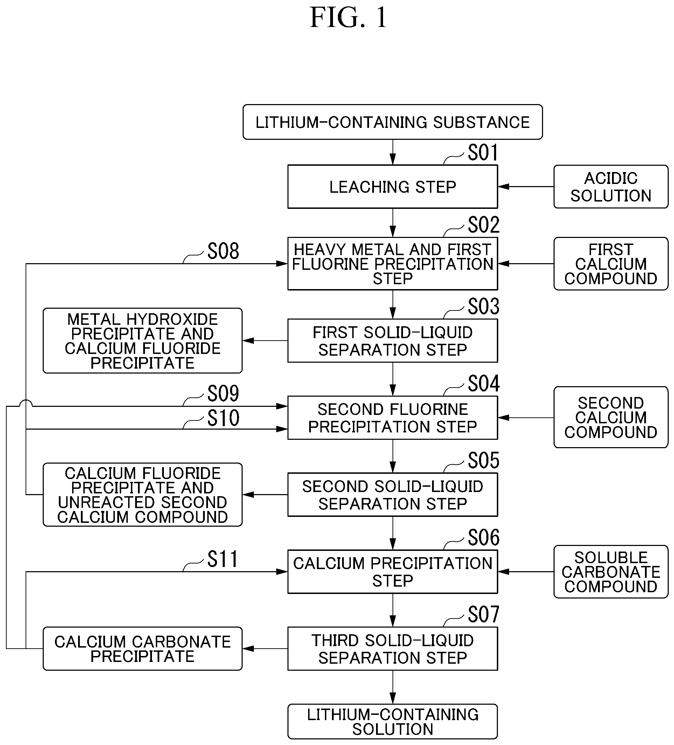

FIG. 1 is a flowchart showing a method for treating a lithium-containing substance according to an embodiment of the present invention.

As shown in FIG. 1, the method for treating a lithium-containing substance of the present embodiment includes a leaching step S01, a heavy metal and first fluorine precipitation step S02, a first solid-liquid separation step S03, a second fluorine precipitation step S04, a second solid-liquid separation step S05, a calcium precipitation step S06, and a third solid-liquid separation step S07.

### (Leaching step S01)

In the leaching step S01, a lithium-containing substance such as a pulverized substance of a lithium ion battery is immersed in an acidic solution to leach lithium into the acidic solution, thereby obtaining a lithium leachate. As the acidic solution, for example, an inorganic acid such as hydrochloric acid, sulfuric acid, or nitric acid can be used alone or in combination. In the present embodiment, sulfuric acid is used as the acid. In the present embodiment, a lithium-containing substance and sulfuric acid are mixed and stirred for 60 minutes to dissolve lithium in the lithium-containing substance to obtain a lithium leachate.

A pH of the lithium leachate is not particularly limited, and is, for example, 1 to 2. In addition, metals other than lithium, fluorine, and the like are also leached into the leachate. The metal contained in the leachate varies depending on the lithium-containing substance to be used, and examples thereof include cobalt, nickel, manganese, iron, aluminum, or the like used as a positive electrode active material, copper, aluminum, iron, or the like used as a current collector or an exterior material of a battery, and the like.

### (Heavy Metal and First Fluorine Precipitation Step S02)

In the heavy metal and first fluorine precipitation step S02, a first calcium compound is added to the lithium leachate obtained in the leaching step S01 to generate a metal hydroxide precipitate and a precipitate of fluorine (for example, calcium fluoride). The addition of the first calcium compound is carried out, for example, while stirring the lithium leachate. The first calcium compound is not particularly limited as long as the first calcium compound is basic, and for example, a solid calcium compound such as calcium carbonate, calcium hydroxide, calcium oxide, or a mixture thereof can be used. A pH of the lithium leachate in a case of generating the metal hydroxide and the calcium fluoride precipitate is adjusted to 8.0 to 12.0. The pH is preferably 9.0 to 11.0, more preferably 9.5 to 10.5, and still more preferably 10.0 from the viewpoint that heavy metal ions are likely to be separated as a hydroxide precipitate, a lithium leachate with high purity is obtained, and the addition amount of the calcium compound can be reduced, whereby the chemical cost can be reduced. As a result, the heavy metal ions precipitate as a metal hydroxide, and fluoride ions precipitate as calcium fluoride.

Here, the heavy metal refers to a metal having a specific gravity of 4.0 g/cm³ or more, and includes, for example, nickel, cobalt, manganese, iron, titanium, zinc, and copper. In addition, other compounds may precipitate, and for example, a compound of aluminum or silicon may precipitate.

### (First Solid-Liquid Separation Step S03)

In the first solid-liquid separation step S03, the metal hydroxide precipitate and the precipitate of the fluorine which precipitate in the heavy metal and first fluorine precipitation step S02 are removed from the lithium leachate. As a method of removing the precipitate, a solid-liquid separation method such as a gravity sedimentation separation method, a centrifugal separation method, or a filter cloth filtration method using a filter press or the like can be used.

### (Second Fluorine Precipitation Step S04)

In the second fluorine precipitation step S04, a second calcium compound is added to the lithium leachate from which the precipitate has been removed in the first solid-liquid separation step S03 to precipitate dissolved fluorine. The second calcium compound is not particularly limited as long as the second calcium compound is a basic calcium compound capable of controlling a pH to 5.0 to 9.0, and for example, a solid calcium compound such as calcium carbonate, calcium hydroxide, calcium oxide, or a mixture thereof can be used. In a case of generating a precipitate of dissolved fluorine (for example, calcium fluoride), the pH of the lithium leachate is first adjusted to 5.0 or less by adding aluminum sulfate, and then the second calcium compound is added to adjust the pH to 5.0 to 9.0. The pH is preferably 6.5 to 8.0, more preferably 7.0 to 7.5, and still more preferably 7.0 from the viewpoint that calcium fluoride is likely to precipitate and a lithium leachate with higher purity is obtained. In this manner, the dissolved fluorine compound that is not completely removed in the heavy metal and first fluorine precipitation step S02 and the first solid-liquid separation step S03 can be caused to precipitate as calcium fluoride. Note that a part of an unreacted second calcium compound precipitates in combination with calcium fluoride.

In the second fluorine precipitation step S04, the sodium compound may be added after the addition of the second calcium compound. In a case where only the calcium compound is added, time is taken to stabilize at a target pH, but in a case where the sodium compound is added after the calcium compound, it is possible to stabilize at the target pH in a short time.

In the second fluorine precipitation step S04, an inorganic flocculant may be added to the lithium leachate. Since sedimentation separability is improved by the inorganic flocculant, and the precipitate of dissolved fluorine and the unreacted substance of the second calcium compound are more likely to be separated in the second solid-liquid separation step S05 described later, a lithium-containing solution with higher lithium purity is obtained. As the inorganic flocculant, for example, a commercially available soluble aluminum compound such as aluminum sulfate (sulfate band) or polyaluminum chloride (PAC) can be used. In addition, since aluminum hydroxide generated by hydrolysis of the soluble aluminum has an effect of adsorbing fluorine, it is possible to obtain a lithium-containing solution with higher lithium purity.

### (Second Solid-Liquid Separation Step S05)

In the second solid-liquid separation step S05, the precipitate of dissolved fluorine precipitated in the second fluorine precipitation step S04 and the unreacted substance of the second calcium compound are removed from the lithium leachate to obtain a lithium-containing solution. As a method of removing the precipitate, a solid-liquid separation method such as a gravity sedimentation separation method, a centrifugal separation method, or a filter cloth filtration method using a filter press or the like can be used.

A polymer flocculant may be added in the second solid-liquid separation step S05. Since formation of agglomerated flock is promoted by the polymer flocculant, the sedimentation separability is dramatically improved, and the precipitate of dissolved fluorine and the unreacted substance of the second calcium compound are more likely to be separated, a lithium-containing solution with higher lithium purity is obtained. As the polymer flocculant, a polymer flocculant used in a general water treatment, for example, an anionic polymer flocculant containing polyacrylamide as a main component can be used.

### (Calcium Precipitation Step S06)

In the calcium precipitation step S06, a soluble carbonate compound is added to the lithium-containing solution from which the precipitate has been removed in the second solid-liquid separation step S05, and dissolved calcium is precipitated as calcium carbonate. The pH of the lithium-containing solution in a case of generating a calcium carbonate precipitate is adjusted to be 8 to 12. The pH is preferably 9 to 11, more preferably 9.5 to 10.5, and still more preferably 10.0 from the viewpoint that calcium carbonate is likely to be generated and a lithium-containing solution with high purity can be obtained, and the viewpoint that precipitation of lithium as carbonate is prevented and a decrease in a lithium concentration of the lithium-containing solution can be prevented. As the soluble carbonate compound, for example, sodium carbonate or sodium hydrogen carbonate can be used as a solution or a powder. In addition, a carbon dioxide gas can be blown into a reaction tank in the calcium precipitation step S06 to be solubilized, thereby allowing the carbon dioxide gas to react with the dissolved calcium.

In the calcium precipitation step S06, the inorganic flocculant may be added to the lithium-containing solution. Since the sedimentation separability is improved by the inorganic flocculant, and the calcium carbonate precipitate is more likely to be removed in the third solid-liquid separation step S07 described later, a lithium-containing solution with higher lithium purity is obtained. As the inorganic flocculant, for example, a commercially available soluble aluminum compound such as aluminum sulfate (sulfate band) or polyaluminum chloride (PAC) can be used.

### (Third Solid-Liquid Separation Step S07)

In the third solid-liquid separation step S07, the calcium carbonate precipitate precipitated in the calcium precipitation step S06 is removed from the lithium-containing solution. As a method of removing the precipitate, a solid-liquid separation method such as a gravity sedimentation separation method, a centrifugal separation method, or a filter cloth filtration method using a filter press or the like can be used.

The polymer flocculant may be added in the third solid-liquid separation step S07. Since the sedimentation separability is dramatically improved by the polymer flocculant, and the calcium carbonate precipitate is more likely to be separated, a lithium-containing solution with higher lithium purity is obtained. As the polymer flocculant, a polymer flocculant used in a general water treatment, for example, an anionic polymer flocculant containing polyacrylamide as a main component can be used.

Here, in the treatment of the lithium-containing substance, it may be required to reduce the chemical cost and the amount of sludge generated. In that case, the method may include at least one of a first recycling step S08 in which, as the first calcium compound to be added in the heavy metal and first fluorine precipitation step S02, a precipitate of dissolved fluorine and an unreacted substance of the second calcium compound separated and recovered in the second solid-liquid separation step S05 are used, a second recycling step S09 in which, as the second calcium compound to be added in the second fluorine precipitation step S04, a calcium carbonate precipitate removed in the third solid-liquid separation step S07 is used, a third recycling step S10 in which, in the second fluorine precipitation step S04, a solid content removed in the second solid-liquid separation step S05 is used as a seed crystal, and a fourth recycling step **S11 in** which, in the calcium precipitation step S06, a calcium carbonate precipitate removed in the third solid-liquid separation step S07 is used as a seed crystal.

### (First Recycling Step S08)

In the first recycling step S08, the precipitate of dissolved fluorine and the unreacted substance of the second calcium compound, which are removed from the lithium-containing solution in the second solid-liquid separation step S05 (in the description of the present step, the precipitate and the unreacted substance are collectively referred to as a solid content), are used as the first calcium compound to be added in the heavy metal and first fluorine precipitation step S02 to cause metal ions and fluoride ions to precipitate. All of the solid content may be added in the heavy metal and first fluorine precipitation step S02, or only a part thereof may be added. In addition, only the solid content may be added in the heavy metal and first fluorine precipitation step S02, or another calcium compound may be added in addition to the solid content. By recycling the unreacted substance of the second calcium compound in this step, it is possible to reduce the chemical cost. In addition, since the precipitates generated in the first fluorine precipitation step and the second fluorine precipitation step can be collected, the sludge treatment cost can be reduced.

### (Second Recycling Step S09)

In the second recycling step S09, the calcium carbonate precipitate removed from the lithium-containing solution in the third solid-liquid separation step S07 is used as the second calcium compound to be added in the second fluorine precipitation step S04 to cause dissolved fluoride ions to precipitate. All of the calcium carbonate precipitate removed in the third solid-liquid separation step S07 may be added in the second fluorine precipitation step S04, or only a part thereof may be added. In addition, only the calcium carbonate precipitate removed in the third solid-liquid separation step S07 may be added in the second fluorine precipitation step S04, or another calcium compound may be added in addition to the calcium carbonate precipitate removed in the third solid-liquid separation step S07. By recycling the calcium carbonate precipitate that is to be discarded in this step, it is possible to reduce the chemical cost and the amount of sludge generated.

### (Third Recycling Step S10)

In the third recycling step S10, the solid content removed from the lithium-containing solution in the second solid-liquid separation step S05 is added to the lithium leachate because the solid content is used as a seed crystal in the second fluorine precipitation step S04. All of the solid content separated in the second solid-liquid separation step S05 may be added in the second fluorine precipitation step S04, or only a part thereof may be added. By using the solid content as the seed crystal in the second fluorine precipitation step, since a solid concentration in the second fluorine precipitation step is increased, fluorine removal efficiency can be increased, and the amount of sludge can also be reduced.

### (Fourth Recycling Step S11)

In the fourth recycling step S11, the calcium carbonate precipitate removed from the lithium-containing solution in the third solid-liquid separation step S07 is added to the lithium-containing solution because the calcium carbonate precipitate is used as a seed crystal in the calcium precipitation step S06. All of the calcium carbonate precipitate removed in the third solid-liquid separation step S07 may be added in the calcium precipitation step S06, or only a part thereof may be added. By recycling the calcium carbonate precipitate that is to be discarded in this step, since the solid concentration in the calcium precipitation step is increased, the calcium removal efficiency can be increased, and the amount of sludge can also be reduced.

By the above-described steps, it is possible to perform a treatment of recovering lithium from the lithium-containing substance with high purity.

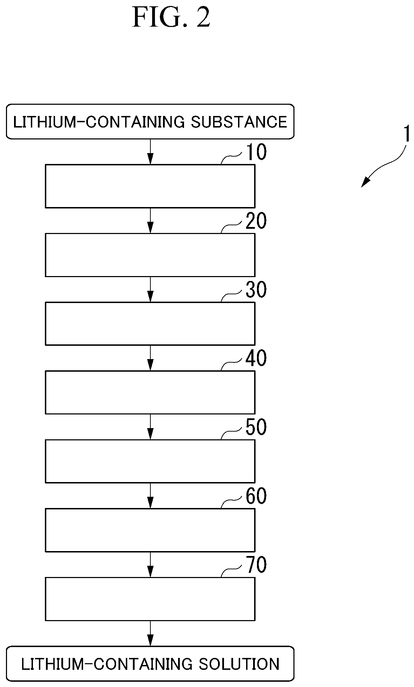

FIG. 2 is a block diagram showing a device for treating a lithium-containing substance according to an embodiment of the present invention.

As shown in FIG. 2, a device 1 for treating a lithium-containing substance of the present embodiment includes at least a leaching tank 10, a heavy metal and first fluorine precipitation tank 20, a first solid-liquid separator 30, a second fluorine precipitation tank 40, and a second solid-liquid separator 50. The device 1 for treating a lithium-containing substance according to the present embodiment may further include a calcium precipitation tank 60 and a third solid-liquid separator 70.

The leaching tank 10 of the present embodiment may be any tank capable of obtaining a lithium leachate by immersing a lithium-containing substance in an acidic solution and leaching lithium into the acidic solution. The heavy metal and first fluorine precipitation tank 20 may be any tank capable of generating a metal hydroxide precipitate and a precipitate of fluorine by adding the first calcium compound to the lithium leachate. The first solid-liquid separator 30 may be any separator capable of removing the metal hydroxide precipitate and the precipitate of fluorine from the lithium leachate. The second fluorine precipitation tank 40 may be any tank capable of causing dissolved fluorine to precipitate by adding the second calcium compound to the lithium leachate. The second solid-liquid separator 50 may be any separator capable of removing the precipitate of the dissolved fluorine and the unreacted substance of the second calcium compound from the lithium leachate to obtain a lithium-containing solution. The calcium precipitation tank 60 may be any tank capable of causing dissolved calcium to precipitate as calcium carbonate by adding a soluble carbonate compound to the lithium-containing solution. The third solid-liquid separator 70 may be any separator capable of removing the calcium carbonate precipitate from the lithium-containing solution.

According to the method for treating a lithium-containing substance of the present embodiment having the above-described configuration, since the leaching step S01, the heavy metal and first fluorine precipitation step S02, and the first solid-liquid separation step S03 are performed to remove the metal ions and the fluoride ions, and then the second fluorine precipitation step S04 and the second solid-liquid separation step S05 are further performed to carry out the step of removing the fluorine in two stages, it is possible to obtain a lithium-containing solution with higher lithium purity as compared with the related art in which a step of removing fluorine is performed in one stage.

Further, by carrying out the calcium precipitation step S06 and the third solid-liquid separation step S07, calcium added in the second fluorine precipitation step S04 can be removed, and thus a lithium-containing solution with higher lithium purity can be obtained.

In the present embodiment, in a case of the configuration in which the first recycling step S08 is used, the chemical cost and the amount of sludge can be reduced.

In the present embodiment, in a case of the configuration in which the second recycling step S09 is used, the chemical cost and the amount of sludge can be reduced.

In the present embodiment, in a case of a configuration in which the third recycling step S10 is used, since the solid concentration of the precipitate of fluorine in the lithium leachate increases in the second fluorine precipitation step S04, the fluorine removal efficiency can be increased, and the amount of sludge can also be reduced.

In the present embodiment, in a case of a configuration in which the fourth recycling step S11 is used, since the solid concentration of calcium carbonate in the lithium-containing solution increases in the calcium precipitation step S06, the calcium removal efficiency can be increased, and the amount of sludge can also be reduced.

In the present embodiment, in a case of a configuration in which the inorganic flocculant is added in the second fluorine precipitation step S04, since the sedimentation separability is improved by the inorganic flocculant, and the precipitate of dissolved fluorine and the unreacted substance of the second calcium generated in the second fluorine precipitation step S04 are more likely to be removed, a lithium-containing solution with higher lithium purity is obtained.

In the present embodiment, in a case of a configuration in which the inorganic flocculant is added in the calcium precipitation step S06, since the sedimentation separability is improved by the inorganic flocculant, and the calcium carbonate precipitate generated in the calcium precipitation step S06 is more likely to be removed, a lithium-containing solution with higher lithium purity is obtained.

In the present embodiment, in the case of a configuration in which the polymer flocculant is added in the second solid-liquid separation step S05, since formation of the agglomerated flock is promoted by the polymer flocculant, the sedimentation separability is dramatically improved, and the precipitate of dissolved fluorine and the unreacted substance of the second calcium are more likely to be separated in the second solid-liquid separation step S05, a lithium-containing solution with higher lithium purity is obtained.

In the present embodiment, in the case of a configuration in which the polymer flocculant is added in the third solid-liquid separation step S07, since formation of the agglomerated flock is promoted by the polymer flocculant, the sedimentation separability is dramatically improved, and the calcium carbonate precipitate is more likely to be separated in the third solid-liquid separation step S07, a lithium-containing solution with higher lithium purity is obtained.

In the present embodiment, in a case of a configuration in which the pH when generating the metal hydroxide precipitate and the precipitate of the fluorine in the heavy metal and first fluorine precipitation step S02 is adjusted to be 9 to 11, a large amount of heavy metal ions are likely to be separated as a hydroxide precipitate in the heavy metal and first fluorine precipitation step S02. Therefore, a lithium-containing solution with high lithium purity can be obtained.

In the present embodiment, in a case of a configuration in which the pH when generating the precipitate of dissolved fluorine in the second fluorine precipitation step S04 is adjusted to be 6.5 to 8, the dissolved fluorine is likely to precipitate in the second fluorine precipitation step S04. Therefore, it is possible to remove a larger amount of fluorine, and a lithium-containing solution with high lithium purity can be obtained.

In the present embodiment, in a case of a configuration in which the pH when generating the calcium carbonate precipitate in the calcium precipitation step S06 is adjusted to be 9 to 11, the calcium carbonate is likely to be generated in the calcium precipitation step S06. Therefore, it is possible to remove a larger amount of calcium, and a lithium-containing solution with high lithium purity can be obtained. In addition, it is possible to prevent lithium from precipitating as a carbonate and to prevent the lithium concentration of the lithium-containing solution from being decreased in the calcium precipitation step S06.

In addition, according to the device for treating a lithium-containing substance of the present embodiment having the above-described configuration, in the heavy metal and first fluorine precipitation tank 20, the first calcium compound is added to cause heavy metals such as cobalt, nickel, and manganese, and fluorine dissolved in the lithium leachate to precipitate, and the precipitates are removed in the first solid-liquid separator 30. Therefore, a lithium leachate with high lithium purity from which heavy metals and fluorine have been removed can be obtained. Furthermore, in the second fluorine precipitation tank 40, by adding the second calcium compound to the lithium leachate, dissolved fluorine that has not been completely removed in the heavy metal and first fluorine precipitation tank 20 and the first solid-liquid separator 30 is caused to precipitate, and in the second solid-liquid separator 50, the precipitate of the precipitated dissolved fluorine and the unreacted substance of the second calcium compound added in the second fluorine precipitation tank 40 are removed. In this manner, it is possible to remove fluorine in an amount that cannot be completely removed in a treatment of removing fluorine in one stage, and it is possible to obtain a lithium-containing solution with higher lithium purity.

In the present embodiment, in a case of a configuration provided with the calcium precipitation tank 60 in which a soluble carbonate compound is added to the lithium leachate to cause calcium to precipitate as calcium carbonate, and the third solid-liquid separator 70 that separates the calcium carbonate from the lithium-containing solution, the second calcium compound added in the second fluorine precipitation tank 40 is removed, and thus a lithium-containing solution with higher lithium purity is obtained.

Hereinabove, the embodiment of the present invention has been described. However, the present invention is not limited thereto and can be suitably modified without departing from the technical idea of the invention.

### Examples

Hereinafter, results of confirmation experiments performed to confirm effectiveness of the present invention will be described.

80 g of calcined and pulverized powder of a lithium ion battery which has a composition of Table 1 was suspended in 320 mL of water, 75 g of 47% sulfuric acid was added to the water, and the resultant mixture was stirred for 60 minutes to leach lithium and heavy metals, thereby obtaining a lithium leachate (leaching step S01). A pH of the lithium leachate at this time was 1.8. Then, a 30% suspension containing 30 g of calcium hydroxide was prepared and 45mL of the 30% suspension was added to the lithium leachate. The pH increased to 11.0. Then, suction filtration was performed to separate a leaching residue and the lithium leachate (first solid-liquid separation step S03). The composition of the calcined and pulverized powder of the lithium ion battery was analyzed by fluorescence X-ray analysis except for lithium and fluorine, by ICP emission spectroscopy for lithium, and by ion chromatography for fluorine.

1,000 mL of lithium leachate was taken, and 2 mL of liquid aluminum sulfate as an inorganic flocculant was added to the lithium leachate. At this time, the pH of the lithium leachate was 4.6. Further, 10 g of calcium carbonate as a seed crystal was added to the lithium leachate. The pH of the lithium leachate at this time was 6.0. After adding these, 25% sodium hydroxide was further added to the lithium leachate to adjust the pH to 7.0, and the resultant mixture was stirred for 1 hour (second fluorine precipitation step S04). 0.5 mL of 0.05 mass% solution of a polymer flocculant (DIAFLOCK A825B) was added to the mixture, and the resultant mixture was stirred to obtain a flock-shaped solid matter. As a result of natural sedimentation separation, 950 mL of a clear supernatant was obtained in approximately two minutes (second liquid separation step S05).

950 mL of supernatant of the lithium-containing solution after sedimentation separation was taken, 1.5 mL of liquid aluminum sulfate was added to the supernatant, and calcium carbonate was added to the supernatant in a concentration of 10 g/L. The pH of the lithium-containing solution at this time was 4.9. Further, in a case where 1.9 g of sodium carbonate was added, the pH was 8.5, and a white precipitate was generated. Furthermore, 2 mL of 25% NaOH was added to the supernatant to adjust the pH to 10.0, and the resultant mixture was stirred for 60 minutes (calcium precipitation step S06). Then, 1.9 mL of 0.05 mass% solution of the polymer flocculant (DIAFLOCK AP825B) was added to the mixture, and the resultant mixture was stirred to obtain a flock-shaped solid matter. As a result of natural sedimentation separation, 900 mL of clear supernatant was obtained in approximately two minutes (third liquid separation step S07). Table 2 shows results obtained by measuring compositions of the lithium leachate and the supernatant obtained in each step by ICP emission spectroscopy.

**[Table 1]**

| Composition of calcined powder of lithium ion battery (mass%) | | | | | | | | | | | | |
|---|---|---|---|---|---|---|---|---|---|---|---|---|
| Zn | Al | Mn | Cu | Li | Ca | Co | Ni | Fe | Si | P | Sn | F |
| 0.109 | 4.47 | 9.76 | 0.533 | 3.8 | 0.138 | 7.45 | 15.5 | 0.255 | 0.119 | 0.44 | 0.004 | 2.6 |

**[Table 2]**

| | ICP/IC (g/L) | | | | | | | | | | | | | | | |
|---|---|---|---|---|---|---|---|---|---|---|---|---|---|---|---|---|
| | Zn | Al | Mn | Cu | Li | Ca | Co | Ni | Fe | Mg | Si | Cd | P | Sn | Pb | F |
| Leachate after step S01 (Lithium leachate) | 0.012 | 4.10 | 8.25 | 0.000 | 6.02 | 0.060 | 7.65 | 8.24 | 0.174 | 0.012 | 0.225 | 0.000 | 1.706 | 0.000 | 0.000 | 5.2 |
| Filtered solution after step S03 (Lithium leachate) | 0.000 | 0.042 | 0.000 | 0.000 | 5.07 | 0.390 | 0.000 | 0.000 | 0.000 | 0.000 | 0.008 | 0.000 | 0.000 | 0.000 | 0.000 | 0.05 |
| Supernatant after step S05 | 0.000 | 0.000 | 0.000 | 0.000 | 5.57 | 0.476 | 0.000 | 0.000 | 0.000 | 0.001 | - | - | - | - | - | 0.011 |
| Supernatant after step S07 (Lithium-containing solution) | 0.000 | 0.003 | 0.000 | 0.000 | 5.48 | 0.026 | 0.000 | 0.000 | 0.000 | 0.000 | - | - | - | - | - | 0.008 |

### (Example 1)

150 g of calcined and pulverized powder of a lithium ion battery was suspended in 815 mL of water, 91 g of 47% sulfuric acid was added to the water, and the resultant mixture was stirred for 60 minutes to leach lithium and heavy metals, thereby obtaining a lithium leachate (leaching step S01). A pH of the lithium leachate at this time was 1.8. Then, 60 g of calcium hydroxide was added to the lithium leachate to prepare a 30% suspension, and 200 mL of suspension was added thereto and stirred (heavy metal and first fluorine precipitation step S02). The pH increased to 10.8. Then, suction filtration was performed to separate a leaching residue and the lithium leachate (first liquid separation step S03).

1,000 mL of lithium leachate was taken, and 0.5 mL of liquid aluminum sulfate as an inorganic flocculant was added to the lithium leachate. At this time, the pH of the lithium leachate was 5.6. Further, 10 g of calcium carbonate as a seed crystal was added to the lithium leachate. The pH of the lithium leachate at this time was 6.0. After adding these, 25% sodium hydroxide was further added to the lithium leachate to adjust the pH to 6.5, and the resultant mixture was stirred for 1 hour (second fluorine precipitation step S04). 1 mL of 0.05 mass% solution of a polymer flocculant (DIAFLOCK AP825B) was added to the mixture, and the mixture was stirred to obtain a flock-shaped solid matter. As a result of natural sedimentation separation, 950 mL of a clear supernatant was obtained in approximately two minutes (second liquid separation step S05). The composition of this supernatant was measured by ICP emission spectroscopy.

### (Examples 2 to 8)

In Examples 2 to 8, experiments were carried out under the same conditions as in Example 1 except that only the addition amount of the liquid aluminum sulfate in the second fluorine precipitation step S04 of Example 1, and the pH of the lithium leachate when liquid aluminum sulfate, calcium carbonate, and sodium hydroxide were added and stirred were changed to different values (pH 6.0 to 8.5).

### (Comparative Example 1)

In Comparative Example 1, after adding the liquid aluminum sulfate in the second fluorine precipitation step S04, 25% sodium hydroxide was added without adding calcium carbonate, and the pH of the lithium leachate was adjusted to 7.0. Other conditions are the same as those in Examples 1 to 8.

Table 3 shows experimental results of Examples 1 to 8 and Comparative Example 1. Note that a pH of the lithium leachate in Table 3 is a pH of the lithium leachate in a case where liquid aluminum sulfate, calcium carbonate, and sodium hydroxide are added and stirred in the second fluorine precipitation step S04. In addition, raw water is a lithium leachate after the first solid-liquid separation step S03.

**[Table 3]**

| | Addition amount of liquid aluminum sulfate [mL] | pH of lithium leachate | Fluorine concentration [mg/L] |
|---|---|---|---|
| Raw water | | | 60 |
| Example 1 | 0.5 | 6.5 | 21 |
| Example 2 | 1.0 | 7.0 | 16 |
| Example 3 | 1.5 | 7.0 | 13 |
| Example 4 | 2.0 | 7.0 | 10 |
| Example 5 | 2.0 | 7.5 | 14 |
| Example 6 | 2.0 | 8.0 | 16 |
| Example 7 | 1.0 | 6.0 | 32 |
| Example 8 | 1.0 | 8.5 | 31 |
| Comparative Example 1 | 1.0 | 7.0 | 42 |

As shown in Table 3, a fluorine concentration in the lithium-containing solution was lower in Examples 1 to 8 in which calcium carbonate was added as compared with Comparative Example 1 in which calcium carbonate was not added. This result indicates that a lithium-containing solution having a low fluorine concentration, that is, high lithium purity can be obtained by performing the step of removing fluorine in two stages. In addition, it could be understood that in a case where the pH of the lithium leachate is 6.5 or more and 8.0 or less, a lithium-containing solution having a lower fluorine concentration as compared with a case where the pH of the lithium leachate is outside this range is obtained.

### (Example 9)

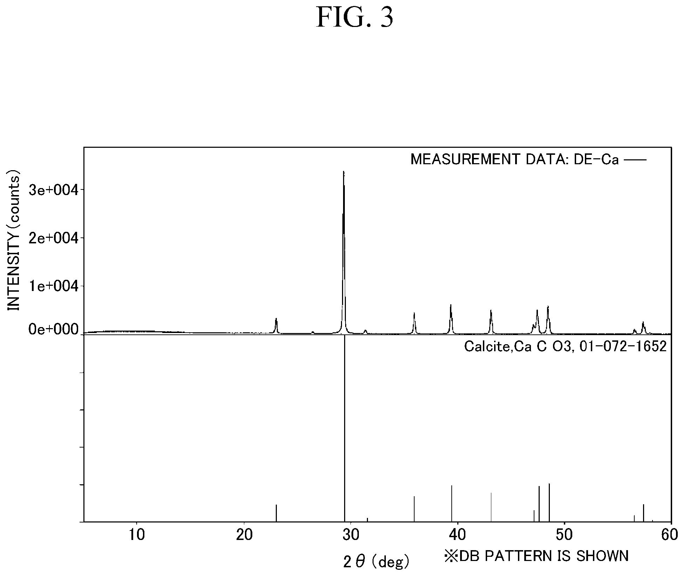

950 mL of supernatant of the lithium-containing solution after the sedimentation separation of Example 5 was taken, 0.5 mL of liquid aluminum sulfate was added to the supernatant, and 25 mL of returned precipitate (solid matter containing calcium carbonate as a main component, which is recovered in a step described later) was added. The pH of the lithium-containing solution at this time was 6.2. Further, in a case where 1.0 g of sodium carbonate was added, the pH was 9.5, and a white precipitate was generated. Furthermore, 0.5 mL of 25% NaOH was added to the supernatant to adjust the pH to 10.0, and the resultant mixture was stirred for 60 minutes (calcium precipitation step S06). Then, 1 mL of 0.05 mass% solution of a polymer flocculant (DIAFLOCK AP825B) was added to the mixture, and the resultant mixture was stirred at a pH of 10.0 for 60 minutes to obtain a flock-shaped solid matter. As a result of natural sedimentation separation, 970 mL of clear supernatant was obtained in approximately two minutes (third liquid separation step S07). The supernatant was collected and filtered through a 0.45 µm membrane filter, and then a composition was examined by ICP emission spectroscopy. In addition, a part of the solid matter was recovered, and the solid matter was identified by powder X-ray diffraction and fluorescence X-ray analysis. Results of the powder X-ray diffraction at this time are shown in FIG. 3, and results of the fluorescence X-ray analysis are shown in Table 4. From the results, it was understood that the main component of the solid matter is calcium carbonate.

**[Table 4]**

| Element | Content ratio (mass%) |
|---|---|
| Al | 2.60 |
| s | 0.48 |
| Ca | 41.5 |

### (Example 10)

In Example 10, an experiment was carried out under the same conditions as in Example 9 except that only the addition amount of sodium carbonate with respect to the lithium-containing solution after sedimentation separation in Example 6 was changed to a value different from that in Example 9. The composition of the supernatant is shown in Table 5.

**[Table 5]**

| | Addition amount of sodium carbonate [g] | Calcium concentration [mg/L] |
|---|---|---|
| Raw water | | 400 |
| Example 9 | 1.0 | 80 |
| Example 10 | 2.0 | 60 |

As shown in Table 5, a lithium-containing solution having a low calcium concentration could be obtained by adding sodium carbonate to cause dissolved calcium to precipitate.

As a result of the above-described confirmation experiment, it was confirmed that according to the present invention, lithium can be recovered with high purity from a lithium-containing substance.

### REFERENCE SIGNS LIST

1 Device for treating lithium-containing substance
10 Leaching tank
20 Heavy metal and first fluorine precipitation tank
30 First solid-liquid separator
40 Second fluorine precipitation tank
50 Second solid-liquid separator
60 Calcium precipitation tank
70 Third solid-liquid separator

## Claims

1. A method for treating a lithium-containing substance, comprising:
a leaching step of adding an acidic solution containing an inorganic acid to the lithium-containing substance to leach lithium into the acidic solution;
a heavy metal and first fluorine precipitation step of adding a first calcium compound to a lithium leachate obtained in the leaching step to cause a heavy metal ion to precipitate as a hydroxide and cause fluorine to precipitate;
a first solid-liquid separation step of separating the hydroxide of the heavy metal ion and a precipitate of the fluorine from the lithium leachate after the heavy metal and first fluorine precipitation step;
a second fluorine precipitation step of adding a second calcium compound to the lithium leachate after the first solid-liquid separation step to cause dissolved fluorine to precipitate; and
a second solid-liquid separation step of separating a precipitate of the dissolved fluorine and an unreacted second calcium compound from the lithium leachate after the second fluorine precipitation step to obtain a lithium-containing solution.

2. The method for treating a lithium-containing substance according to Claim 1, further comprising:
a calcium precipitation step of adding a soluble carbonate compound to the lithium-containing solution after the second solid-liquid separation step to cause calcium to precipitate as calcium carbonate; and
a third solid-liquid separation step of separating the calcium carbonate from the lithium-containing solution after the calcium precipitation step.

3. The method for treating a lithium-containing substance according to Claim 1,
wherein the precipitate of the dissolved fluorine and the unreacted second calcium compound, which are separated in the second solid-liquid separation step, are used as the first calcium compound in the heavy metal and first fluorine precipitation step.

4. The method for treating a lithium-containing substance according to Claim 2,
wherein the calcium carbonate separated in the third solid-liquid separation step is used as the second calcium compound in the second fluorine precipitation step.

5. The method for treating a lithium-containing substance according to Claim 1,
wherein a solid content separated in the second solid-liquid separation step is used as a seed crystal in the second fluorine precipitation step.

6. The method for treating a lithium-containing substance according to Claim 2,
wherein the calcium carbonate separated in the third solid-liquid separation step is used as a seed crystal in the calcium precipitation step.

7. The method for treating a lithium-containing substance according to Claim 1,
wherein in the second fluorine precipitation step, a sodium compound is added after the second calcium compound is added.

8. The method for treating a lithium-containing substance according to Claim 1,
wherein in the second fluorine precipitation step, a soluble aluminum compound is added.

9. The method for treating a lithium-containing substance according to Claim 2,
wherein in the calcium precipitation step, a soluble aluminum compound is added.

10. The method for treating a lithium-containing substance according to Claim 1,
wherein in the second solid-liquid separation step, an anionic polymer flocculant is added.

11. The method for treating a lithium-containing substance according to Claim 2,
wherein in the third solid-liquid separation step, an anionic polymer flocculant is added.

12. The method for treating a lithium-containing substance according to Claim 1,
wherein in the heavy metal and first fluoride precipitation step, a pH is adjusted to be in a range of 9 or more and 11 or less by adding the first calcium compound.

13. The method for treating a lithium-containing substance according to Claim 1,
wherein in the second fluorine precipitation step, a pH is adjusted to be in a range of 6.5 or more and 8.0 or less by adding the second calcium compound.

14. The method for treating a lithium-containing substance according to Claim 2,
wherein in the calcium precipitation step, a pH is adjusted to be in a range of 9 or more and 11 or less by adding the soluble carbonate compound.

15. The method for treating a lithium-containing substance according to any one of Claims 1 to 14,
wherein the lithium-containing substance is a fine powder obtained by pulverizing a lithium ion battery.

16. A device for treating a lithium-containing substance, comprising:
a leaching tank configured to add an acidic solution containing an inorganic acid to a lithium-containing substance to leach lithium into the acidic solution to generate a lithium leachate;
a heavy metal and first fluorine precipitation tank configured to add a first calcium compound to the lithium leachate to cause a heavy metal ion to precipitate as a hydroxide and cause fluorine to precipitate;
a first solid-liquid separator configured to separate the hydroxide of the heavy metal ion and a precipitate of the fluorine from the lithium leachate;
a second fluorine precipitation tank configured to add a second calcium compound to the lithium leachate to cause dissolved fluorine to precipitate; and
a second solid-liquid separator configured to separate a precipitate of the dissolved fluorine and an unreacted second calcium compound from the lithium leachate to obtain a lithium-containing solution.

17. The device for treating a lithium-containing substance according to Claim 16, further comprising:
a calcium precipitation tank configured to add a soluble carbonate compound to the lithium-containing solution to cause calcium to precipitate as calcium carbonate; and
a third solid-liquid separator configured to separate the calcium carbonate from the lithium-containing solution.
